# EUROPEAN PATENT APPLICATION

(11) **EP 4 495 819 A1**
(43) Date of publication of application: **22.01.2025**
(21) Application number: 24315325.1
(22) Date of filing: 04.07.2024
(51) Int. Cl.: G06F 21/57, G06F 11/36, G06N 3/044

(54) **DEVICE, SYSTEM AND METHOD FOR IMPLEMENTING A RECURRENT NEURAL NETWORK TO DETERMINE A GIVEN REGION OF A BUILD LOG THAT MEETS A FATAL ERROR CRITERION CONDITION**

(30) Priority: 19.07.2023 US 202363527649 P
(71) Applicant: Amadeus S.A.S., 06410 Biot (FR)
(72) Inventor: Zouaoui, Jihane, 06330 Roquefort Les Pins (FR); Troncy, Raphael, 06410 Biot (FR); Rampal, Vincent, 06250 Mougins (FR); Moriconi, Florent, 06330 Roquefort Les Pins (FR); Francillon, Aurelian, 06410 Biot (FR); Rolland, Laurine Astrid Graziella, 06300 Nice (FR)
(74) Representative: Samson & Partner Patentanwälte mbB

(57) **Abstract**

A computing device trains a recurrent neural network (RNN), using a balanced dataset, to predict whether logs input to the RNN are indicative of respective successful computer code or respective failed computer code, the balanced dataset comprising positive log examples and negative log examples from a continuous integration (Cl) pipeline, the positive log examples labelled as being indicative of successful computer code, and the negative log examples labelled as being indicative of failed computer code. The computing device inputs a log to the RNN, and monitors evolution of belief predictions of the RNN, as the RNN is analyzing the log, according to successive regions of the log. The computing devices determines, based on the evolution of the belief predictions, that a given region of the log meets a log fatal error criterion condition, and outputs an indication of the given region.

## Description

### FIELD

The present specification relates generally to recurrent neural networks, and specifically to a device, system and method for implementing a recurrent neural network to determine a given region of a build log that meets a fatal error criterion condition.

### BACKGROUND

Continuous Integration (CI) is a widely used technique for regularly integrating programming code changes from many developers into software projects. Programming code changes (amongst other possibilities, such as timers, manual actions, and the like) may be input to a CI pipeline to trigger CI builds (e.g., output by the CI pipeline). A CI build may comprise a set of actions that ensure a set of conditions is met (e.g., a respective set of programming code compiles, syntax of the programming code is respected, and the like). CI systems of large companies may process thousands to tens of thousands, and more, of programming code changes to generate thousands to tens of thousands, and more builds per day. However, a portion of a build may fail because a code change may be buggy (e.g., due to a developer error) and/or because of infrastructure instabilities (e.g., often non-deterministic failures), amongst other possibilities. In practice, between 10% and 20% of builds may fail. Identifying the root cause of failures may be time-consuming and does not scale with a large number of failures. It is a problem not only in the context of Continuous Integration (CI) but to audit generally any type of software application.

### SUMMARY

A first aspect of the present specification provides a method comprising: training, via a computing device, a recurrent neural network (RNN), using a balanced dataset, to predict whether build logs input to the RNN are indicative of respective successful builds or respective failed builds, the balanced dataset comprising positive build log examples and negative build log examples from a continuous integration (CI) pipeline, the positive build log examples labelled as being indicative of successful builds, and the negative build log examples labelled as being indicative of failed builds; inputting, via the computing device, a build log to the RNN; monitoring, via the computing device, evolution of belief predictions of the RNN, as the RNN is analyzing the build log, according to successive regions of the build log; determining, via the computing device, based on the evolution of the belief predictions, that a given region of the build log meets a build log fatal error criterion condition; and outputting, via the computing device, an indication of the given region.

At the method of the first aspect, the balanced dataset may comprise an equal number of the positive build log examples and the negative build log examples.

At the method of the first aspect, the build log may be output by the CI pipeline and labelled as being indicative of a failed build.

At the method of the first aspect, monitoring evolution of the belief predictions of the RNN according to the successive regions of the build log may comprise monitoring a prediction of the RNN that the build log is indicative of a successful build or a failed build on a character-by-character, word-by-word basis or a line-by-line basis or a region-by-region basis.

At the method of the first aspect, a region, of the successive regions of the build log, may comprise one or more of: at least one character of the build log; at least one word of the build log; and at least one line of the build log.

At the method of the first aspect, the build log fatal error criterion condition may comprise: the belief predictions falling below a given threshold at the given region, and an output of the RNN being indicative that the build log is indicative of a failed build.

At the method of the first aspect, the balanced dataset may comprise an about equal number of the positive build log examples and the negative build log examples, and the build log fatal error criterion condition may comprise: the belief predictions falling below 0.5 at the given region, and an output of the RNN being indicative that the build log is indicative of a failed build.

At the method of the first aspect, the build log fatal error criterion condition may comprise: a derivative of the belief predictions being at a minimum at the given region, and an output of the RNN being indicative that the build log is indicative of a failed build.

At the method of the first aspect, the given region may comprise a plurality of lines of the build log. At the method of the first aspect, the indication of the given region may identify the plurality of lines.

The method of the first aspect may further comprise initiating a process for repairing a failed build of the build log, in a region of the failed build indicated by the given region.

A second aspect of the present specification provides a computing device comprising: a controller; and a computer-readable storage medium having stored thereon program instructions that, when executed by the controller, cause the computing device to perform a set of operations comprising: training a recurrent neural network (RNN), using a balanced dataset, to predict whether build logs input to the RNN are indicative of respective successful builds or respective failed builds, the balanced dataset comprising positive build log examples and negative build log examples from a continuous integration (CI) pipeline, the positive build log examples labelled as being indicative of successful builds, and the negative build log examples labelled as being indicative of failed builds; inputting a build log to the RNN; monitoring evolution of belief predictions of the RNN, as the RNN is analyzing the build log, according to successive regions of the build log; determining, based on the evolution of the belief predictions, that a given region of the build log meets a build log fatal error criterion condition; and outputting an indication of the given region.

At the computing device of the second aspect, the balanced dataset may comprise an equal number of the positive build log examples and the negative build log examples.

At the computing device of the second aspect, the build log may be output by the CI pipeline and may be labelled as being indicative of a failed build.

At the computing device of the second aspect, monitoring evolution of the belief predictions of the RNN according to the successive regions of the build log may comprise monitoring a prediction of the RNN that the build log is indicative of a successful build or a failed build on a character-by- character, word-by-word basis or a line-by-line basis or a region-by-region basis.

At the computing device of the second aspect, a region, of the successive regions of the build log, may comprise one or more of: at least one character of the build log; at least one word of the build log; and at least one line of the build log.

At the computing device of the second aspect, the build log fatal error criterion condition may comprise: the belief predictions falling below a given threshold at the given region, and an output of the RNN being indicative that the build log is indicative of a failed build.

At the computing device of the second aspect, the balanced dataset may comprise an about equal number of the positive build log examples and the negative build log examples, and the build log fatal error criterion condition may comprise: the belief predictions falling below 0.5 at the given region, and an output of the RNN being indicative that the build log is indicative of a failed build.

At the computing device of the second aspect, the build log fatal error criterion condition may comprise: a derivative of the belief predictions being at a minimum at the given region, and an output of the RNN being indicative that the build log is indicative of a failed build.

At the computing device of the second aspect, the given region may comprise a plurality of lines of the build log. At the computing device of the second aspect, the indication of the given region may identify the plurality of lines.

At the computing device of the second aspect, the set of operations may further comprise initiating a process for repairing a failed build of the build log, in a region of the failed build indicated by the given region.

A third aspect of the present specification provides a non-transitory computer-readable storage medium having stored thereon program instructions that, when executed by a computing device, causes the computing device to perform a method comprising: training, via the computing device, a recurrent neural network (RNN), using a balanced dataset, to predict whether build logs input to the RNN are indicative of respective successful builds or respective failed builds, the balanced dataset comprising positive build log examples and negative build log examples from a continuous integration (CI) pipeline, the positive build log examples labelled as being indicative of successful builds, and the negative build log examples labelled as being indicative of failed builds; inputting, via the computing device, a build log to the RNN; monitoring, via the computing device, evolution of belief predictions of the RNN, as the RNN is analyzing the build log, according to successive regions of the build log; determining, via the computing device, based on the evolution of the belief predictions, that a given region of the build log meets a build log fatal error criterion condition; and outputting, via the computing device, an indication of the given region.

At the method of the third aspect, the balanced dataset may comprise an equal number of the positive build log examples and the negative build log examples.

At the method of the third aspect, the build log may be output by the CI pipeline and labelled as being indicative of a failed build.

At the method of the third aspect, monitoring evolution of the belief predictions of the RNN according to the successive regions of the build log may comprise monitoring a prediction of the RNN that the build log is indicative of a successful build or a failed build on a character-by-character, word-by-word basis or a line-by-line basis or a region-by-region basis.

At the method of the third aspect, a region, of the successive regions of the build log, may comprise one or more of: at least one character of the build log; at least one word of the build log; and at least one line of the build log.

At the method of the third aspect, the build log fatal error criterion condition may comprise: the belief predictions falling below a given threshold at the given region, and an output of the RNN being indicative that the build log is indicative of a failed build.

At the method of the third aspect, the balanced dataset may comprise an about equal number of the positive build log examples and the negative build log examples, and the build log fatal error criterion condition may comprise: the belief predictions falling below 0.5 at the given region, and an output of the RNN being indicative that the build log is indicative of a failed build.

At the method of the third aspect, the build log fatal error criterion condition may comprise: a derivative of the belief predictions being at a minimum at the given region, and an output of the RNN being indicative that the build log is indicative of a failed build.

At the method of the third aspect, the given region may comprise a plurality of lines of the build log. At the method of the third aspect, the indication of the given region may identify the plurality of lines.

The method of the third aspect may further comprise initiating a process for repairing a failed build of the build log, in a region of the failed build indicated by the given region.

A fourth aspect of the present specification provides a method comprising: training, via a computing device, a recurrent neural network (RNN), using a balanced dataset, to predict whether logs input to the RNN are indicative of respective successful computer code or respective failed computer code, the balanced dataset comprising positive log examples and negative log examples for corresponding computer code, the positive log examples labelled as being indicative of successful computer code, and the negative log examples labelled as being indicative of failed computer code; inputting, via the computing device, a log to the RNN; monitoring, via the computing device, evolution of belief predictions of the RNN, as the RNN is analyzing the log, according to successive regions of the log; determining, via the computing device, based on the evolution of the belief predictions, that a given region of the log meets a log fatal error criterion condition; and outputting, via the computing device, an indication of the given region.

At the method of the fourth aspect, the balanced dataset may comprise an equal number of the positive log examples and the negative log examples.

At the method of the fourth aspect, the log may be labelled as being indicative of corresponding failed computer code.

At the method of the fourth aspect, monitoring evolution of the belief predictions of the RNN according to the successive regions of the log may comprise monitoring a prediction of the RNN that the log is indicative of successful computer code or failed computer code on a character-by- character, word-by-word basis or a line-by-line basis or a region-by-region basis.

At the method of the fourth aspect, a region, of the successive regions of the log, may comprise one or more of: at least one character of the log; at least one word of the log; and at least one line of the log.

At the method of the fourth aspect, the log fatal error criterion condition may comprise: the belief predictions falling below a given threshold at the given region, and an output of the RNN being indicative that the log is indicative of corresponding failed computer code.

At the method of the fourth aspect, the balanced dataset may comprise an about equal number of the positive log examples and the negative log examples, and the log fatal error criterion condition may comprise: the belief predictions falling below 0.5 at the given region, and an output of the RNN being indicative that the log is indicative of corresponding failed computer code.

At the method of the fourth aspect, the log fatal error criterion condition may comprise: a derivative of the belief predictions being at a minimum at the given region, and an output of the RNN being indicative that the log is indicative of a corresponding failed computer code.

At the method of the fourth aspect, the given region may comprise a plurality of lines of the log. At the method of the fourth aspect, the indication of the given region may identify the plurality of lines.

The method of the fourth aspect may further comprise initiating a process for repairing corresponding failed computer code of the log, in a region of the corresponding failed computer code indicated by the given region.

A fifth aspect of the present specification provides a computing device comprising: a controller; and a computer-readable storage medium having stored thereon program instructions that, when executed by the controller, cause the computing device to perform a set of operations comprising: training a recurrent neural network (RNN), using a balanced dataset, to predict whether logs input to the RNN are indicative of respective successful computer code or respective failed computer code, the balanced dataset comprising positive log examples and negative log examples from a continuous integration (CI) pipeline, the positive log examples labelled as being indicative of successful computer code, and the negative log examples labelled as being indicative of failed computer code; inputting a log to the RNN; monitoring evolution of belief predictions of the RNN, as the RNN is analyzing the log, according to successive regions of the log; determining, based on the evolution of the belief predictions, that a given region of the log meets a log fatal error criterion condition; and outputting an indication of the given region.

At the computing device of the fifth aspect, the balanced dataset may comprise an equal number of the positive log examples and the negative log examples.

At the computing device of the fifth aspect, the log may be output by the CI pipeline and may be labelled as being indicative of corresponding failed computer code.

At the computing device of the fifth aspect, monitoring evolution of the belief predictions of the RNN according to the successive regions of the log may comprise monitoring a prediction of the RNN that the log is indicative of successful computer code or a failed computer code on a character-by- character, word-by-word basis or a line-by-line basis or a region-by-region basis.

At the computing device of the fifth aspect, a region, of the successive regions of the log, may comprise one or more of: at least one character of the log; at least one word of the log; and at least one line of the log.

At the computing device of the fifth aspect, the log fatal error criterion condition may comprise: the belief predictions falling below a given threshold at the given region, and an output of the RNN being indicative that the log is indicative of corresponding failed computer code.

At the computing device of the fifth aspect, the balanced dataset may comprise an about equal number of the positive log examples and the negative log examples, and the log fatal error criterion condition may further comprise: the belief predictions falling below 0.5 at the given region, and an output of the RNN being indicative that the log is indicative of corresponding failed computer code.

At the computing device of the fifth aspect, the log fatal error criterion condition may comprise: a derivative of the belief predictions being at a minimum at the given region, and an output of the RNN being indicative that the log is indicative of corresponding failed computer code.

At the computing device of the fifth aspect, the given region may comprise a plurality of lines of the log. At the computing device of the fifth aspect, the indication of the given region may identify the plurality of lines.

At the computing device of the fifth aspect, the set of operations may further comprise initiating a process for repairing corresponding failed computer code of the log, in a region of corresponding failed computer code indicated by the given region.

A sixth aspect of the present specification provides a non-transitory computer-readable storage medium having stored thereon program instructions that, when executed by a computing device, causes the computing device to perform a method comprising: training, via the computing device, a recurrent neural network (RNN), using a balanced dataset, to predict whether logs input to the RNN are indicative of respective successful computer code or respective failed computer code, the balanced dataset comprising positive log examples and negative log examples for corresponding computer code, the positive log examples labelled as being indicative of successful computer code, and the negative log examples labelled as being indicative of failed computer code; inputting, via the computing device, a log to the RNN; monitoring, via the computing device, evolution of belief predictions of the RNN, as the RNN is analyzing the log, according to successive regions of the log; determining, via the computing device, based on the evolution of the belief predictions, that a given region of the log meets a log fatal error criterion condition; and outputting, via the computing device, an indication of the given region.

At the method of the sixth aspect, the balanced dataset may comprise an equal number of the positive log examples and the negative log examples.

At the method of the sixth aspect, the log may be labelled as being indicative of corresponding failed computer code.

At the method of the sixth aspect, monitoring evolution of the belief predictions of the RNN according to the successive regions of the log may comprise monitoring a prediction of the RNN that the log is indicative of successful computer code or failed computer code on a character-by-character, word-by-word basis or a line-by-line basis or a region-by-region basis.

At the method of the sixth aspect, a region, of the successive regions of the log, may comprise one or more of: at least one character of the log; at least one word of the log; and at least one line of the log.

At the method of the sixth aspect, the log fatal error criterion condition may comprise: the belief predictions falling below a given threshold at the given region, and an output of the RNN being indicative that the log is indicative of corresponding failed computer code.

At the method of the sixth aspect, the balanced dataset may comprise an about equal number of the positive log examples and the negative log examples, and the log fatal error criterion condition may comprise: the belief predictions falling below 0.5 at the given region, and an output of the RNN being indicative that the log is indicative of corresponding failed computer code.

At the method of the sixth aspect, the log fatal error criterion condition may comprise: a derivative of the belief predictions being at a minimum at the given region, and an output of the RNN being indicative that the log is indicative of a corresponding failed computer code.

At the method of the sixth aspect, the given region may comprise a plurality of lines of the log. At the method of the sixth aspect, the indication of the given region may identify the plurality of lines.

The method of the sixth aspect may further comprise initiating a process for repairing corresponding failed computer code of the log, in a region of the corresponding failed computer code indicated by the given region.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for implementing a recurrent neural network to determine a given region of a build log that meets a fatal error criterion condition, according to non-limiting examples.
FIG. 2 depicts a device for implementing a recurrent neural network to determine a given region of a build log that meets a fatal error criterion condition, according to non-limiting examples.
FIG. 3 depicts a flowchart of a method for implementing a recurrent neural network to determine a given region of a build log that meets a fatal error criterion condition, according to non-limiting examples.
FIG. 4 depicts the system of FIG. 1 implementing aspects of a method for implementing a recurrent neural network to determine a given region of a build log that meets a fatal error criterion condition, according to non-limiting examples.
FIG. 5 depicts the system of FIG. 1 implementing yet further aspects of a method for implementing a recurrent neural network to determine a given region of a build log that meets a fatal error criterion condition, according to non-limiting examples.
FIG. 6 depicts an example of a build log, according to non-limiting examples.
FIG. 7 depicts an example of a graph representing belief prediction of a recurrent neural network while analyzing a build log, according to non-limiting examples.
FIG. 8 depicts an example of a graph representing a derivative of a belief prediction of a recurrent neural network while analyzing a build log, according to non-limiting examples.
FIG. 9 depicts the system of FIG. 1 implementing yet further aspects of a method for implementing a recurrent neural network to determine a given region of a build log that meets a fatal error criterion condition, according to non-limiting examples.

### DETAILED DESCRIPTION

A CI pipeline is understood to receive code changes, timed actions, manual actions, amongst other possibilities, as input and outputs to generate builds. A build log is associated with a build. Determining why a build has failed may be performed manually by investigating a build log. In general, a build log is understood to comprise outputs of commands included in a build. However, as builds can be thousands to tens of thousands of lines of code, or more, build logs are similarly large, and hence investigating a build log can be cumbersome and time consuming.

Furthermore, builds and corresponding build logs are generally output from a CI pipeline, and a build log may indicate only whether a corresponding build was successful or has failed.

In addition, investigation of a build log of a corresponding failed build is subject to bias by a developer reviewing the build log. In particular, a developer attempts to identify a location of a root cause of a failure in the build, and different developers may determine different locations in the build for the failure. While cross-validation may be performed to increase the confidence of identification of the location of the failure, such a process may be time consuming, may not yield consistent results, and may not be feasible; in practice, due to cost. For example, cross-validation may refer to multiple developers investigating the same build, and different developers may end up with different conclusions on the failed build.

As such, provided herein is a computing device that trains a recurrent neural network (RNN) to predict whether build logs input to the RNN are indicative of respective successful builds or respective failed builds. The RNN is trained (e.g., in a training mode) using a balanced dataset of positive build log examples and negative build log examples from a CI pipeline, the positive build log examples labelled as being indicative of successful builds, and the negative build log examples labelled as being indicative of failed builds. However, regions of the negative build log examples that caused a failure of corresponding builds are generally not identified in the balanced dataset. Put another way, in the balanced data set, lines and/or regions of a root cause of a failure are not identified. Hence, the balanced data set is relatively simply to produce and labelling thereof is generally binary in nature. A positive build log example is generally labelled as corresponding to a successful build (e.g., a positive build log example may be labelled as "1"), and a negative build log example is generally labelled as corresponding to a failed build (e.g., a negative build log example may be labelled as "0"). However, any labelling scheme is within the scope of the present specification. Indeed, it is understood that such a balanced dataset may be easier to generate than a dataset of builds and/or build logs with their root cause locations identified.

Once the RNN is trained, build logs from the CI pipeline may be input to the RNN and the RNN may generally output an indication only of whether a build log corresponds to a successful build or a failed build. Such an indication and/or output by the RNN may be referred to as a belief prediction (which may be interchangeably referred to as a prediction), indicating a "belief" and/or prediction by the RNN as to whether a build log corresponds to a successful build or a failed build. For example, using a scale of 0 to 1, where 0 indicates a failed build, and 1 indicates a successful build, the RNN may output a value (e.g., a belief prediction) between 0 and 1, which indicates a belief prediction by the RNN of the build log corresponding to a successful build or a failed build. In general, presuming equal, and/or about equal, respective numbers of positive build log examples and negative build log examples, values (e.g., belief predictions) greater than 0.5 may indicate a successful build, and values (e.g., belief predictions) less than 0.5 may indicate a failed build. However, presuming the balanced dataset is large (e.g., more than 100 to 1000 examples each of positive build log examples and negative build log examples), values output by the RNN tend to be greater than 0.9 for successful builds and less than 0.1 for failed builds. Indeed, as the number of positive build log examples and negative build log examples of the balanced dataset increase, the more output of the RNN may converge towards "1" for successful builds, and "0" for failed builds.

Once the RNN is trained, the computing device may input a build log from the CI pipeline into the RNN (e.g., the RNN operated in a normal mode and/or an analysis mode). In particular, the computing device may input a build log of a corresponding build that has failed, as indicated by the CI pipeline.

However, while the RNN is analyzing the build log of the failed build, the computing device monitors evolution of belief predictions of the RNN, according to successive regions of the build log, in particular from a first region to a last region (e.g., from beginning to end) of the failed build log. In some examples, monitoring of the RNN may occur on a line-by-line basis and/or the successive regions may include as few as one line of the build log. In general, evolution of belief predictions of the RNN generally refers to how a prediction of the RNN changes over time, and/or on a region-by-region basis, as the RNN is analyzing a build log.

Monitoring of the belief prediction may occur by way of a process that may be referred to as instrumentation, for example by monitoring internal processes of the RNN to receive intermediate results of the belief prediction and/or output of the RNN. In particular, monitoring of the belief prediction may occur via an instrumentate engine implemented by the computing device, and which interfaces with the RNN to monitor evolution of the belief prediction of the RNN as the RNN is analyzing a build log, for example in a sequence from beginning to end of the build log.

In particular, the RNN generally analyzes a build log on a region-by-region, and/or line-by-line basis, and/or word-by-word basis and/or on a character-by-character basis, starting with a first character and/or first word and/or first line and/or first region, and ending with a last character and/or last word and/or last line and/or last region of the build log. Put another way, as a build log is generally text, and/or a sequence of characters and/or words and/or lines and/or regions, the RNN analyzes characters and/or words and/or lines and/or regions in the sequence, from beginning to end, and makes intermediate belief predictions of whether the build log corresponds to a successful build log or a failed build log upon analysis of each character and/or word and/or line and/or region in the sequence. As such the belief prediction may evolve over time and/or as the RNN analyzes characters and/or words and/or lines and/or regions in the sequence. Hence, for example, and using the 0 to 1 scale as previously described, initially an RNN may assign a belief prediction of "0.5" to a build log as, initially, from the RNN's perspective, the build log has an equal chance of corresponding to a successful build or a failed build (e.g., as a balanced data is used to train the RNN). As characters and/or words and/or lines and/or regions of the sequence are analyzed (e.g., in a sequence of the build log), in a sequence from beginning to end of the build log, the initial belief prediction may change from 0.5 towards 1 or 0, depending on whether each character and/or word and/or line and/or region indicates possible success or failure of the corresponding build. Furthermore, the belief prediction of the RNN may increase and/or decrease as the RNN is analyzing the sequence of characters and/or words and/or lines and/or regions of a build log. Hence, for example, the instrumentate engine may output a graph, and the like, of belief prediction of the RNN as a function of character number and/or word number and/or line number and region number of the build log.

The computing device may determine, based on the evolution of the belief predictions of the RNN for a build log (e.g., as represented by a graph, and the like, output by the instrumentate engine) that a given region of the build log meets a build log fatal error criterion condition and hence may include an indication of a root cause of the failure of the corresponding build. Put another way, the identified given region of the build log may correspond to a region of the corresponding build that includes a root cause of the failure of the build.

In one example, such build log fatal error criterion conditions may include, but is not limited to, the belief predictions falling below a given threshold, such as 0.5 at a given region, and an output of the RNN being indicative that the build log is indicative of a failed build (e.g., the final belief prediction is below 0.5).

In another example, such build log fatal error criterion conditions may include, but is not limited to, a derivative of the belief predictions being at a minimum at the given region (e.g., a negative slope), and an output of the RNN being indicative that the build log is indicative of a failed build (e.g., the final belief prediction is below 0.5).

In some examples, the given region may comprise one line, however in other examples the given region may comprise a plurality of lines. Regardless, a given region that meets a build log fatal error criterion condition may generally be identified by the computing device as a region of the build log that indicates where a root cause that lead to a failure of the corresponding build is located.

The computing device may output an indication of the given region, for example over a computer network, such that users of the computer network have immediate access to the indication. of the given region. For example, the indication of the given region may identify a line and/or lines of the build log that indicates where a failure of the corresponding build occurred. Furthermore, the computing device may output the indication of the given region to a computer terminal, and the like, of a developer so that the developer may repair the corresponding build as the indication based on the identification of the line and/or lines of the build log that indicates where a failure of the corresponding build occurred.

In some examples, as the device, system and/or method provided in the present specification may indicate, in a build log, where a root cause that lead to a failure of a corresponding build is located, program repair algorithms, and the like, may be used to focus on a location where the root cause occurred, instead of all locations indicated by the build log where errors occurred. Put another way, as many and/or most failures indicated by the build log may be non-fatal, and only one may be fatal, focusing a program repair algorithm on a location where the root cause of a failure occurred, while ignoring locations corresponding to non-fatal errors, may save time and/or processing resources.

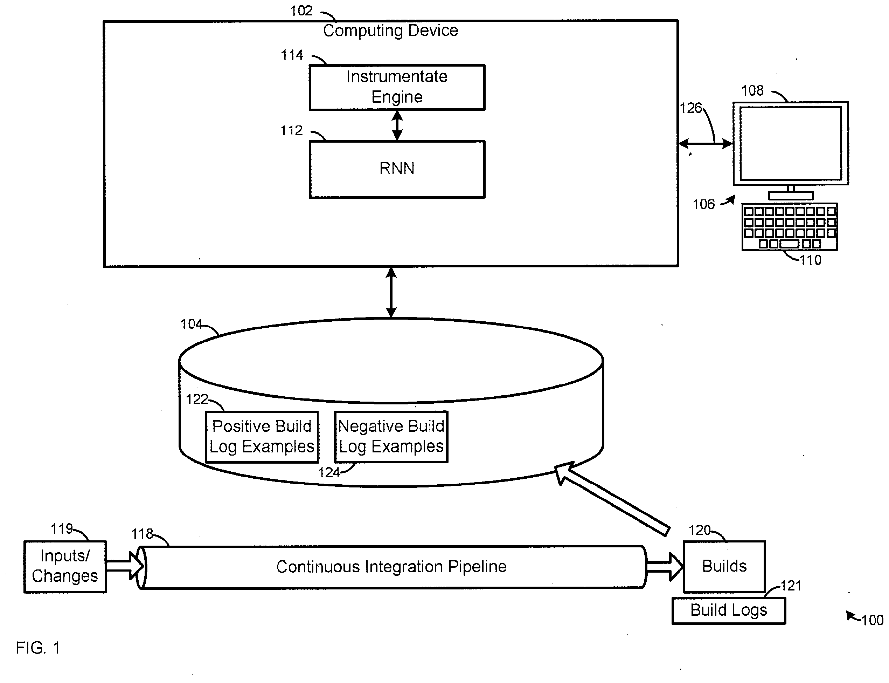

FIG. 1 depicts a system 100 for implementing a recurrent neural network (RNN) to determine a given region of a build log that meets a fatal error criterion condition which may mitigate and/or reduce at least a portion of the aforementioned technical challenges. The components of the system 100 are generally in communication via communication links which are depicted in FIG. 1, and throughout the present specification, as double-ended arrows between respective components. The communication links include any suitable combination of wireless and/or wired communication networks and, similarly, the communication links may include any suitable combination of wireless and/or wired links.

The system 100 will furthermore be described with respect to engines. As used herein, the term "engine" refers to hardware (e.g., a processor, such as a central processing unit (CPU), graphics processing unit (GPU), an integrated circuit or other circuitry) or a combination of hardware and software (e.g., programming such as machine- or processor-executable instructions, commands, or code such as firmware, a device driver, programming, object code, etc. as stored on hardware). Hardware includes a hardware element with no software elements such as an application specific integrated circuit (ASIC), a Field Programmable Gate Array (FPGA), a PAL (programmable array logic), a PLA (programmable logic array), a PLD (programmable logic device), etc. A combination of hardware and software includes software hosted at hardware (e.g., a software module that is stored at a processor-readable memory such as random access memory (RAM), a hard-disk or solid-state drive, resistive memory, or optical media such as a digital versatile disc (DVD), and/or implemented or interpreted by a processor), or hardware and software hosted at hardware.

In particular the system 100 comprises a computing device 102 in communication with a database 104 and a computer device and/or terminal 106 which, as depicted, may comprise a display screen 108 and an input device 110. In general, the computing device 102 implements an RNN 112 and an instrumentate engine 114. While not labelled as such, the RNN 112 may be provided in the form of an engine and more specifically an RNN engine. The RNN 112 may comprise any suitable RNN, and which may include, but is not limited to, a long short-term memory network (LSTM), gated recurrent units (GRUs), bidirectional RNNs, attention mechanisms, and the like, amongst other possibilities.

As depicted, the system 100 further comprises a CI pipeline 118 into which one or more inputs and/or programming code changes 119 are input and corresponding builds 120 (e.g., software builds) are output, along with corresponding build logs 121. In general, the CI pipeline 118 outputs builds 120 and corresponding build logs 121, which may be stored at the database 104. In some examples, the CI pipeline 118 outputs the builds 120 to the database 104, and/or the CI pipeline 118 outputs failed builds 120 (and successful builds 120) to the database 104, for example along with corresponding build logs 121. For example, the CI pipeline 118 may further output an indication of whether a build 120 is successful or has failed. However, the CI pipeline 118 generally performs any suitable functionality of a CI pipeline.

While only one database 104 is depicted, the system 100 may comprise any suitable number of databases, and/or any other suitable memories, which store build logs in any suitable format.

As depicted, the builds logs stored at the database 104 include positive build log examples 122, comprising build logs 121 corresponding to successful builds 120, and negative build log examples 122, comprising build logs 121 corresponding to failed builds 120, for example as determined by output from the CI pipeline 118. The build log examples 122, 124 may respectively comprise respective build logs 121 corresponding to positive/ successful builds 120, and negative/ failed builds 120. Hence, for example, a positive build log example 122 comprises a list of outputs of commands included in a successful build 120, as stored in a corresponding build log 121, and a negative build log example 124 comprises a list of outputs of commands included in a failed build 120, as stored in a corresponding build log 121. In general, the list of outputs of the commands for the build log examples 122, 124 are provided in a sequence that correspond to a sequence of the commands in a build 120. Hence, a first line of a build log example 122, 124 may correspond to an output of a first command of a build 120, and a last line of a build log example 122, 124 may correspond to an output of a last command of the build 120.

The positive build log examples 122 may be stored with an indication that the corresponding build succeeded (e.g., such as "l") and negative build log examples 124 may be stored with an indication that the corresponding build failed (e.g., such as "0").

Respective numbers of the positive build log examples 122 and the negative build log examples 124 as stored at the database 104 may be any suitable number. However, as will be presently described, the positive build log examples 122 and the negative build log examples 124 may be used to train the RNN 112, and the number of the positive build log examples 122 and the negative build log examples 124 used to train the RNN 112 may be equal, and/or about equal and/or about the same. Indeed, an equal number, and/or about an equal number, of the positive build log examples 122 and the negative build log examples 124 may form a balanced dataset. In particular, a balanced dataset of the positive build log examples 122 and the negative build log examples 124 may comprise an equal number of the positive build log examples 122 and the negative build log examples 124, which may be used to train the RNN 112. Indeed, an equal number of positive build log examples 122 and negative build log examples 124 that forms a balanced dataset used to train the RNN 112 may ensure that output from the RNN 112 (e.g., a belief prediction) that is greater than 0.5 indicates a successful corresponding build for a build log 121 input to the RNN 112, and output from the RNN 112 (e.g., a belief prediction) that is less than 0.5 indicates a failed corresponding build 120 for a build log 119 input to the RNN 112.

However, whether the balanced dataset includes exactly the same number of the positive build log examples 122 and the negative build log examples 124 may depend on how many of the positive build log examples 122 and the negative build log examples 124 are in the balanced dataset. For example, a balanced data set of tens of thousands of the positive build log examples 122 and the negative build log examples 124 may have an about the same, but not exactly the same, number of the positive build log examples 122 and the negative build log examples 124, though the respective numbers of the positive build log examples 122 and the negative build log examples 124 may be within 0.1% of each other, and the like. In general, the larger the balanced data, the less important it is that the respective numbers of the positive build log examples 122 and the negative build log examples 124 be the same. However, respective numbers of the respective numbers of the positive build log examples 122 and the negative build log examples 124 may be generally chosen such that output from the RNN 112 (e.g., a belief prediction) that is greater than 0.5 indicates a successful corresponding build for a build log 121 input to the RNN 112, and output from the RNN 112 (e.g., a belief prediction) that is less than 0.5 indicates a failed corresponding build 120 for a build log 121 input to the RNN 112. As will be presently explained, with a balanced dataset, it is understood that an initial belief prediction of RNN 112 may be 0.5 and/or about 0.5.

Indeed, it is understood that such a balanced dataset may be easier to generate than a dataset of builds and/or build logs with their root cause locations identified. Indeed, it is understood that the balanced data set may comprise the positive build log examples 122 and the negative build log examples 124, the positive build log examples 122 labelled as being indicative of successful builds, and the negative build log examples 124 labelled as being indicative of failed builds, but without any indication of a location where a root cause of failure occurred.

The instrumentate engine 114 may generally be configured to monitor evolution of the belief prediction of the RNN 112 as the RNN 112 is analyzing a build log 121 using, for example, any suitable instrumentation process for monitoring internal states of an RNN. For example, the instrumentate engine 114 may be based on software such as PyTorch^{™}, Tensor Flow^{™}, and the like, but specifically adapted to monitor internal states of the RNN 112 as the RNN 112 is analyzing a build log. In particular, the instrumentate engine 114 is generally configured to communicate with the RNN 112 to receive, and store (e.g., in cache and/or memory of the computing device 102), a belief prediction of the RNN 112 as the RNN 112 processes each line and/or portion of a build log 121. In some examples, such functionality may be at least partially incorporated into the RNN 112, and/or at least a portion of the instrumentate engine 114 and the RNN 112 may be combined. However, it is understood that the present specification does not require that an RNN be modified, but rather the monitoring functionality as described herein may be solely incorporated into the instrumentate engine 114. It is understood that when the RNN 112 completes an analysis of a build log 121, the instrumentate engine 114 may return a value of the prediction associated with each line and/or portion of a build log 121 input to the RNN 112.

The instrumentate engine 114 may output a graph, and the like, indicative of the evolution of the belief prediction of the RNN 112 analyzing a build log 121. However, the output of the instrumentate engine 114 may be in any suitable format (e.g., including, but not limited to, a list of values, key-value pairs, and the like, amongst, other possibilities).

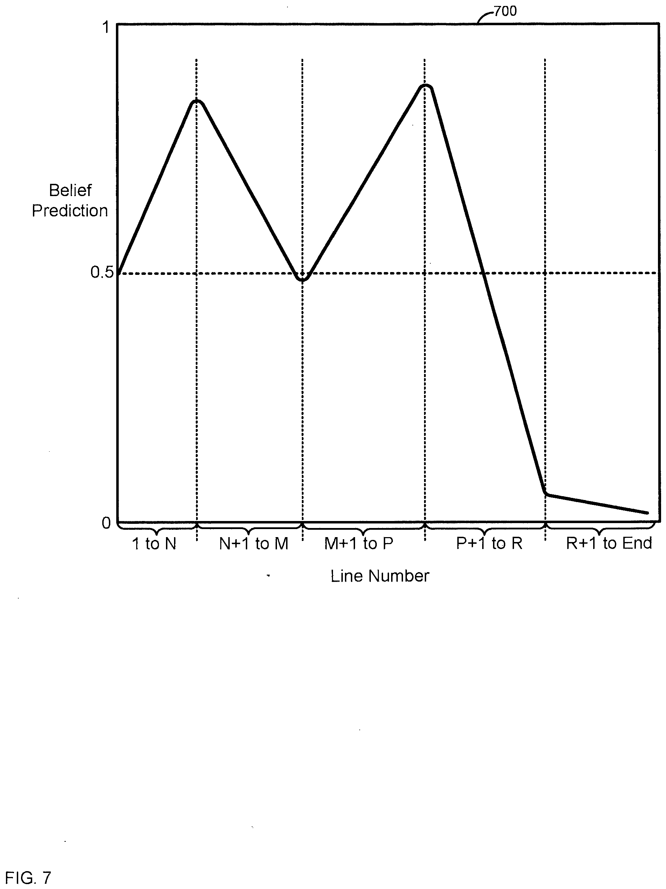

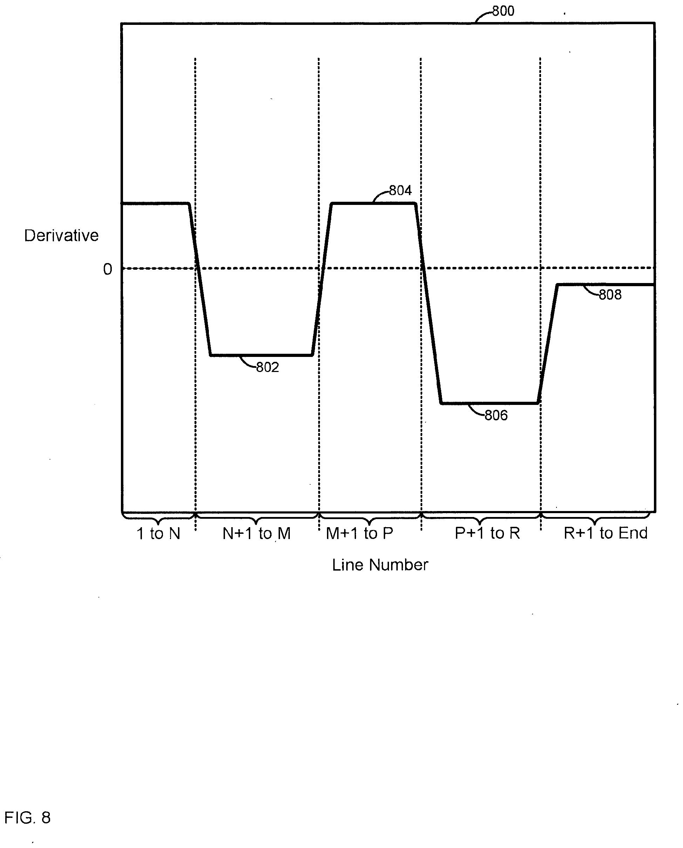

Based on the evolution of the belief prediction of the RNN 112, the computing device 102 may determine, that a given region of a build log 121 meets a build log fatal error criterion condition, described in more detail below with respect to FIG. 7 and FIG. 8. In general, such a region may correspond to a region of a build 120 where a failure occurred. Hence, when such a region is identified, repair of the build 120 may occur. Put another way, such a region may correspond to a region of a build 120 where a root cause of a failure is located, and hence, when such a region is identified, repair of the build 120 may occur by repairing the root cause.

As such, the computing device 102 may output an indication of the given region of a build log 121 that correspond to a region of a build 120 where a failure occurred, for example to the computer device and/or terminal 106. Indeed, the computer device and/or terminal 106 may be in communication with the computing device 102 via a computer network 126, as represented in FIG. 1 by the communication link between the computing device 102 and the computer device and/or terminal 106. Put another way, the computing device 102 may output an indication of a given region of a build log 121 corresponding to a region of a build 120 where a failure occurred, for example over the computer network 126, such that users of the computer network 126 have immediate access to the indication of the given region. It is understood that the term "users" in this context may include the computer device and/or terminal 106.

For example, the computer device and/or terminal 106 may comprise a computer terminal operated by a developer (not depicted), who may be tasked with repairing builds 120, for example via interacting with the display screen 108 and the input device 110. Hence, when an indication of a region of a build log 121 is received at the computer device and/or terminal 106, such a region indicating a corresponding region of a build 120 where a root cause of a failure occurred, the developer may access the build 120 and repair the corresponding region of the build 120.

Alternatively, the computer device and/or terminal 106 may comprise an automated and/or assistive code repair computing device which may repair a code of a build 120 and/or assist a developer with repairing programming code of a build 120, when an indication of a region of a build log 121, that corresponds to a region of a build 120 where a failure occurred, is received at the computer device and/or terminal 106. Indeed, in these examples, the computer device and/or terminal 106 may implement one or more machine learning algorithms trained to repair code in such regions.

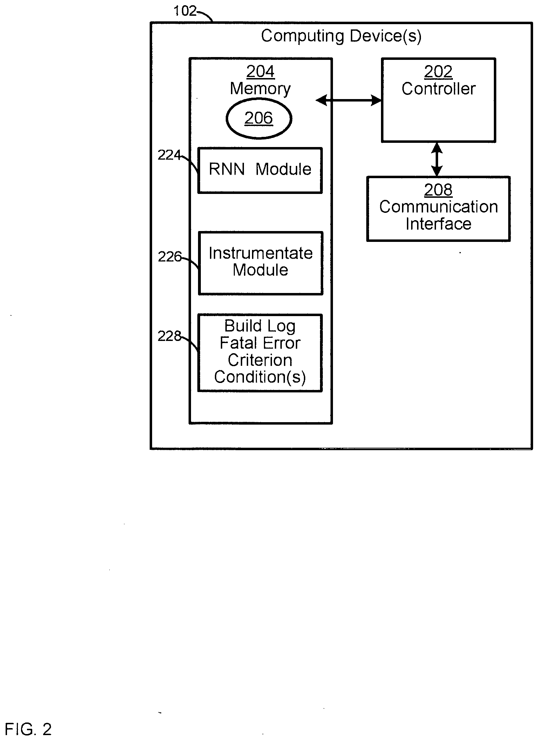

Attention is next directed to FIG. 2 which depicts details of the computing device 102. As shown in FIG. 2. In particular, while the computing device 102 is depicted as implementing both the RNN 112 and the instrumentate engine 114, it is understood that one or more of the RNN 112 and the instrumentate engine 114 may be implemented at any suitable combination of computing devices, including, but not limited, to one or more servers, one or more cloud computing devices, and the like, and the computing device 102 may interface with such other computing devices to train the RNN 112 and/or monitor a belief prediction of the RNN 112.

Alternatively, and/or in addition, the computing device 102 may comprise one or more computing devices, and/or one or more servers and/or one or more cloud computing devices, and the like. Alternatively, and/or in addition, the computing device 102 may comprise one or more personal computers and/or one or more laptops, and/or any other suitable computing device.

In the depicted example of FIG. 1, the computing device 102 includes at least one controller 202, such as a central processing unit (CPU) or the like. The controller 202 is interconnected with a memory 204 storing an application 206, the memory 204 implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

The controller 202 is also interconnected with a communication interface 208, which enables the computing device 102 to communicate with the other components of the system 100, for example via a suitable communication network and/or the computer network 126. The communication interface 208 therefore may include any suitable components (e.g., network interface controllers (NICs), radio units, and the like) to communicate via any suitable network. The specific components of the communication interface 208 may be selected based upon the nature of a network used to communicate, and/or local communication between components of the system 100, and the like.

While not depicted in FIG. 2, the computing device 102 can also include input and output devices connected to the controller 202, such as keyboards, mice, display screens, and the like (not shown) but which may include, but are not limited to, the display screen 108 and the input device 110.

The components of the computing device 102 mentioned above can be deployed in a single enclosure, or in a distributed format. In some examples, therefore, the computing device 102 may include a plurality of processors, either sharing the memory 204 and communication interface 208, or each having distinct associated memories and communication interfaces. As such, it is understood that the memory 204, and/or a portion of the memory 204, may be internal (e.g., as depicted) or external to the computing device 102; regardless, the controller 202 is understood to have access to the memory 204.

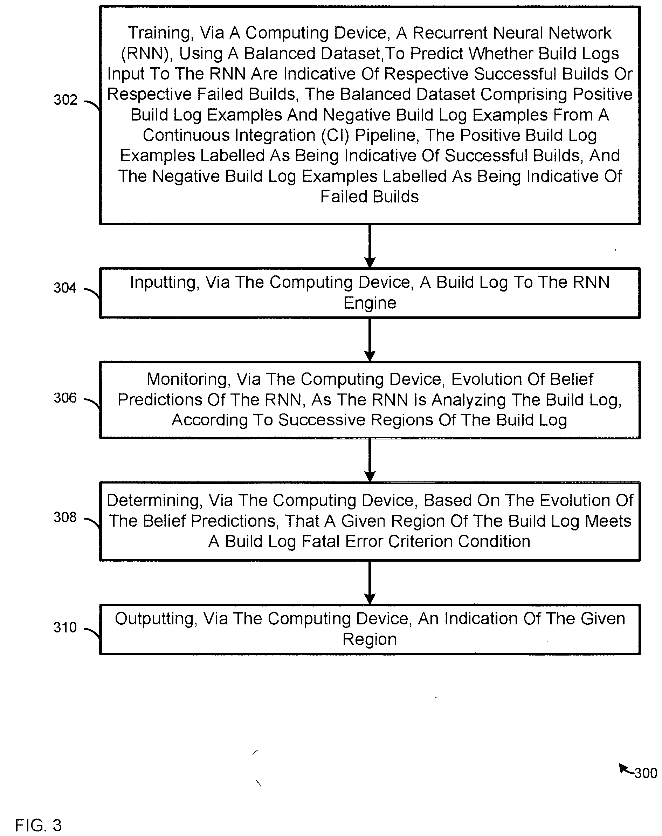

The memory 204 also stores computer-readable programming instructions, executable by the controller 202, in the form of various applications, including the application 206. As will be understood by those skilled in the art, the controller 202 executes the instructions of the application 206 (and any other suitable applications) in order to perform various actions defined by the instructions contained therein including, but not limited to, the blocks of a method described with respect to FIG. 3. In the description below, the controller 202, and more generally the computing device 102, are understood to be configured to perform those actions. It will be understood that they are so configured via the execution (by the controller 202) of the instructions of the applications stored in memory 204. Put another way, the computing device 102 is understood to comprise the controller 202; and a (e.g., non-transitory) computer-readable storage medium (e.g., the memory 204) having stored thereon program instructions (e.g., the application 206 and/or any other suitable modules, and the like stored at the memory 204 as described hereafter) that, when executed by the controller 202, cause the computing device 202 to perform a set of operations comprising the blocks of a method described with respect to FIG. 3.

As depicted, the memory 204 further stores an RNN module 224 which comprises computer-readable programming instructions for implementing the RNN 112, for example when processed by the controller 202.

As depicted, the memory 204 further stores an instrumentate module 226 which comprises computer-readable programming instructions for implementing the instrumentate engine 114, for example when processed by the controller 202.

As depicted, the memory 204 further stores one or more build log fatal error criterion conditions 228 which comprises computer-readable programming instructions for determining whether a given region of the build log meets a build log fatal error criterion condition, based on the evolution of the belief predictions output by the instrumentate engine 114.

While the RNN module 224, the instrumentate module 226, and the one or more build log fatal error criterion conditions 228 are depicted as being separate from the application 206, in other examples, one or more of the RNN module 224, the instrumentate module 226, and the one or more build log fatal error criterion conditions 228, may be a component of the application 206.

Attention is now directed to FIG. 3 which depicts a flowchart representative of a method 300 for implementing a recurrent neural network to determine a given region of a build log that meets a fatal error criterion condition. The operations of the method 300 of FIG. 3 correspond to machine readable instructions that are executed by a computing device 102, and specifically a controller 202 of a computing devices102. In the illustrated example, the instructions represented by the blocks of FIG. 3 are stored at the memory 204 for example, as the RNN module 224, the instrumentate module 226, and the one or more build log fatal error criterion conditions 228. The method 300 of FIG. 3 is one way in which the controller 202 and/or the computing devices 102 and/or the system 100 may be configured. Furthermore, the following discussion of the method 300 of FIG. 3 will lead to a further understanding of the system 100, and its various components.

The method 300 of FIG. 3 need not be performed in the exact sequence as shown and likewise various blocks may be performed in parallel rather than in sequence. Accordingly, the elements of method 300 are referred to herein as "blocks" rather than "steps." The method 300 of FIG. 3 may be implemented on variations of the system 100, as well.

At a block 302, the controller 202 and/or the computing device 102, trains the RNN 112 using a balanced dataset, to predict whether build logs input to the RNN 112 are indicative of respective successful builds 120 or respective failed builds 120. As has already been described, the balanced dataset generally comprises positive build log examples122 and negative build log examples 124 from the CI pipeline 118, the positive build log examples 122 labelled as being indicative of successful builds 120, and the negative build log examples 124 labelled as being indicative of failed builds 120.

Such labelling of the positive build log examples122 and the negative build log examples 124 may occur via the CI pipeline 118, which may out the positive build log examples122 and the negative build log examples 124 and label the positive build log examples122 and the negative build log examples 124 accordingly as being respectively indicative of successful builds 120 and failed builds 120.

In general, the balanced dataset may comprise an equal number of the positive build log examples 122 and the negative build log examples 124. However, when the balanced dataset is large, for example greater than 10,000 positive build log examples 122 and negative build log examples 124, respective numbers of the positive build log examples 122 and the negative build log examples 124 of the balanced data set may be about equal, for example within 0.1% of each other, and/or within 1% of each other, and/or within any other suitable range of each other.

However, as has been previously described, respective numbers of the positive build log examples 122 and the negative build log examples 124 of the balanced data set may be generally chosen such that output from the RNN 112 (e.g., a belief prediction) that is greater than 0.5 indicates a successful corresponding build for a build log input to the RNN 112, and output from the RNN 112 (e.g., a belief prediction) that is less than 0.5 indicates a failed corresponding build for a build log input to the RNN 112.

However, when respective numbers of the positive build log examples 122 and the negative build log examples 124 are not equal, a value, above and below which output of the RNN 112 is respectively indicative of a corresponding build 120 being a successful build 120 or a failed build 120, may be adjusted accordingly. For example, when the balanced dataset comprises 60% positive build log examples 122 and 40% negative build log examples 124, output from the RNN 112 (e.g., a belief prediction) that is greater than 0.4 may indicate a successful corresponding build for a build log input to the RNN 112, and output from the RNN 112 (e.g., a belief prediction) that is less than 0.4 may indicate a failed corresponding build for a build log input to the RNN 112.

In particular, at the block 302, the RNN 112 may be operated in a training mode, and the positive build log examples 122 and the negative build log examples 124 may be provided to the RNN 112 as training input, while respective labels thereof (e.g., "1" or "0") may be provided to the RNN 112 as training output. Hence, the RNN 112 is generally trained to determine whether a build log input to the RNN 112 is indicative of a successful build or a failed build, and hence output an indication thereof. It is understood that the RNN 112 is not specifically trained to identify, and output, a region of a build log that includes a root cause of a failure of a corresponding build.

It is further understood that the controller 202 and/or the computing device 102 may collect the positive build log examples 122 and the negative build log examples 124 from the database 104. Alternatively, and/or in addition, the controller 202 and/or the computing device 102 may collect the positive build log examples 122 and the negative build log examples 124 from the CI pipeline 118.

At a block 304, the controller 202 and/or the computing device 102, inputs a build log 121 to the RNN 112.

Such an input of a build log 121 to the RNN 112 is understood to occur after the RNN 112 is trained at the block 302.

Furthermore, such an input of a build log 121 to the RNN 112 is understood to occur while the RNN 112 is in a normal mode and/or an analysis mode (e.g., different from the training mode).

Furthermore, the build log 121 input to the RNN 112 is understood to be output by the CI pipeline 118, and labelled as being indicative of a failed build 120; alternatively, and/or in addition, such a failed build 120 may be labelled as a failed build 120. Such labelling may occur via the CI pipeline 118 similar to the labelling of the positive build log examples 122 and the negative build log examples 124.

Put another way, the build log 121 input to the RNN 112 is understood to be output by the CI pipeline 118 which also outputs the positive build log examples 122 and the negative build log examples 124.

At a block 306, the controller 202 and/or the computing device 102, monitors evolution of belief predictions of the RNN 112, as the RNN 112 is analyzing the build log, according to successive regions of the build log. Such regions may comprise characters and/or words and/or groups of words of the build log, and/or lines and/or groups of lines of the build log, and the like.

Furthermore, it is understood that the RNN 112 begins analysis of the build log at a beginning of the build log, and/or a first character and/or first word of the build log, and/or a first line of the build log, and ends analysis of the build log at an end of the build log, and/or a last character and/or last word of the build log, and/or a last line of the build log. Hence, the RNN 112 is understood to perform the analysis of the build log according to sequence of characters and/or words and/or lines, and the like, of the build log, the sequence beginning with a first character and/or first word and/or first line of the build log, and ending with a last character and/or last word and/or last line of the build log.

In a particular example, the instrumentate engine 114 may monitor the RNN 112 to determine internal states of the RNN 112 as the RNN 112 analyzes such sequence of characters and/or words and/or lines and/or regions of the build log input to the RNN 112 in the sequence of characters and/or words and/or lines, and the like, of the build log. However, such monitoring evolution of the belief predictions of the RNN 112 may occur in any suitable manner, using any suitable process and/or engine, and/or component of the application 206, and the like. For example, such monitoring is understood to occur during an "inference phase" of the RNN 112, for example before the RNN 112 outputs a final belief prediction.

For example, monitoring evolution of the belief predictions of the RNN 112 according to the successive regions of the build log may comprise monitoring a prediction of the RNN 112 that the build log is indicative of a successful build 120 or a failed build 120 on a character-by-character and/or word-by-word basis or a line-by-line basis or a region-by-region basis. In particular, a region, of the successive regions of the build log, may comprise one or more of: at least one character of the build log; at least one word of the build log; at least one line of the build log; and/or any other suitable groups of characters and/or words and/or lines and/or regions.

In general, the evolution of the belief predictions of the RNN 112 may be represented by a graph, and the like, indicating change and/or evolution of the belief predictions RNN 112 over time, and/or as a function of characters and/or words and/or lines and/or regions, in the sequence, of the build log input to the RNN 112. While present examples are described with respect to the instrumentate engine 114 outputting such a graph, and the like, it is understood that the instrumentate engine 114 may output a belief prediction of the RNN 112 on a character-by-character basis and/or a word-by-word basis and/or a line-by-line basis or a region-by-region basis, and the controller 202 and/or the computing device 102 may collect such output and build the evolution of the belief predictions of the RNN 112 accordingly (e.g., in the form of a graph and/or any other suitable format).

At a block 308 the controller 202 and/or the computing device 102, determines, based on the evolution of the belief predictions, that a given region of the build log meets a build log fatal error criterion condition 228.

In some examples, a build log fatal error criterion condition 228 may comprise: the belief predictions falling below a given threshold at the given region, and an output of the RNN 112 being indicative that the build log is indicative of a failed build (e.g., the RNN 112 may output a value less than the given threshold).

Alternatively, and/or in addition, a build log fatal error criterion condition 228 may comprise: the belief predictions falling below a given threshold at the given region and does not later increase above the given threshold and/or never again crosses the given threshold and/or does not again cross the given threshold. Put another way, a build log fatal error criterion condition 228 may comprise the belief predictions falling below a given threshold at the given region. falls below the given threshold, and does not later increase above the given threshold and/or never again cross the given threshold and/or does not again cross the given threshold

In some examples, when the balanced dataset comprises an equal number of the positive build log examples 122 and the negative build log examples 124, such a given threshold of a build log fatal error criterion condition 228 may be 0.5.

Put another way, when the balanced dataset comprises an equal, and/or an about equal number, of the positive build log examples 122 and the negative build log examples 124, a build log fatal error criterion condition 228 may comprise: the belief predictions falling below 0.5 at the given region, and an output of the RNN 112 being indicative that the build log is indicative of a failed build 120.

However, the given threshold may be any suitable value, and may depend on relative numbers of the positive build log examples 122 and the negative build log examples 124 as has been previously described.

Hence, in these examples, when the RNN 112 outputs a final belief prediction that is below the given threshold, the given region of the build log where the belief prediction falls below the given threshold may indicate a region of the corresponding build 120 where the corresponding build 120 failed.

Alternatively, and/or in addition, a build log fatal error criterion condition 228 may comprise: a derivative of the belief predictions being at a minimum at the given region, and an output of the RNN being indicative that the build log is indicative of a failed build. Indeed, a negative derivative generally indicates a negative slope of a graph, and hence when a derivative of the belief predictions is at a minimum, such a derivative may indicate that the belief prediction decreased in a given region of the derivative, and hence the given region of the build log where the derivative is negative may indicate a region of the corresponding build 120 where the corresponding build 120 failed.

However, such build log fatal error criterion conditions 228 may be combined in any given manner.

For example, evolution of the belief predictions may include several regions where respective derivatives thereof are negative, but only one of the regions may correspond to a region where the belief predictions also dropped below a given threshold. Hence, when there are two or more regions where respective derivatives thereof are negative, the given region that corresponds to a region of a build 120 that caused the build 120 to fail may be the region where the belief predictions also dropped below a given threshold.

Furthermore, the given region identified at the block 310 may comprise a plurality of lines of the build log input to the RNN 112 at the block 304. However, it is understood that such a plurality of lines of the given region is less than a total number of lines of the build log input to the RNN 112. In some examples, the plurality of lines of the given region may be less than 10% of the total number of lines of the build log input to the RNN 112, and/or the plurality of lines of the given region may be less than 5% of the total number of lines of the build log input to the RNN 112, the plurality of lines of the given region may be less than 1% of the total number of lines of the build log input to the RNN 112. In some examples, the given region identified at the block 310 may comprise as few as one line.

Indeed, the number of the plurality of characters and/or words and/or lines of the given region may depend on the training of the RNN 112, and/or a number of the positive build log examples 122 and the negative build log examples 124 of the balanced dataset. Indeed, in some examples, the larger a number of the positive build log examples 122 and the negative build log examples 124 of the balanced dataset, the smaller the number of lines of the given region. Furthermore, it is understood that the training RNN 112 may occur according to a given "step size", where training RNN 112 occurs according to analysis of a given number (e.g., a step size) of characters and/or words and/or lines; hence, the number of the plurality of characters and/or words and/or lines of the given region may correspond to such a step size.

At a block 310, the controller 202 and/or the computing device 102, outputs an indication of the given region.

For example, the indication of the given region may identify a plurality of lines of the build log that correspond to the given region. In some examples, the indication may be in a format of "Line N to M", where "N" is a line number of a first line of the given region, and "M" is line number of a last line of the given region number. However, the indication of the given region may be in any suitable format.

In some examples, the indication may also include a probability that the given region identifies the region of the build log that corresponds to a root cause of the failure of the corresponding build 120. Such a probability may be determined from the evolution of the belief prediction in the given region that meets a build log fatal error criterion condition 228. Such a probability may be determined at the block 308, for example. For example, when there are two or more regions where respective derivatives thereof are at minim a(e.g., negative) and/or a local minima, a probability may be assigned to each region as to whether a respective region corresponds to a root cause of the failure of the corresponding build 120. For example, in one of the two or more regions, the evolution of the belief prediction may fall from above a given threshold (e.g., of 0.5) to below the given threshold, while in others of the two or more regions the evolution of the belief prediction may be above or below the given threshold, but may not cross the given threshold. In these examples, the region where the evolution of the belief prediction falls below the given threshold may be assigned a higher probability of corresponding to a root cause of the failure of the corresponding build 120 than the other regions, and may be identified as the given region of the block 308.

Furthermore, the indication may be output to the computing device and/or terminal 106, as previously described, along with an identifier of one or more of the build log input to the RNN 112 at the block 304 and/or the corresponding build 120, such that the build log and/or the corresponding build 120 may be retrieved (e.g., from the database 104) for repair.

Alternatively, and/or in addition, the indication may be output to the computing device and/or terminal 106, as previously described, along with one or more of the build log input to the RNN 112 at the block 304 and/or the corresponding build 120.

Furthermore, the indication may be output to the computing device and/or terminal 106, as previously described, and such an output may initiate a process for repairing the corresponding build 120. For example, a code change, and the like, to repair the build 120 may be input to the CI pipeline 118, and corresponding build, as repaired, may be output by the CI pipeline 118, which does not and/or is successful.

Hence, the method 300 may further comprise, the controller 202 and/or the computing device 102 initiating a process for repairing a failed build of the build log (of the block 304), in a region of a failed build indicated by the given region. Indeed, such a process may be initiated by the controller 202 and/or the computing device 102 via outputting the indication at the block 310 and/or such a process may be initiated by the controller 202 and/or the computing device 102 in place of outputting the indication at the block 310. Such a process may include, but is not limited to, outputting the indication at the block 310 along with a command to cause the process for repairing the failed build to occur at the computing device and/or terminal 106. In some of these examples, the failed build may be output to the controller 202 and/or the computing device 102 with the indication and/or the command. In some examples, the command may be output in place of the indication, and/or the command may include the indication. In yet further examples, the process for repairing the failed build may occur at the computing device 102.

Furthermore, the indication of the given region may be output over the computer network 126, such that users of the computer network 126 have immediate access to the indication of the given region and/or such that a process for repairing the corresponding build 120 may be initiated.

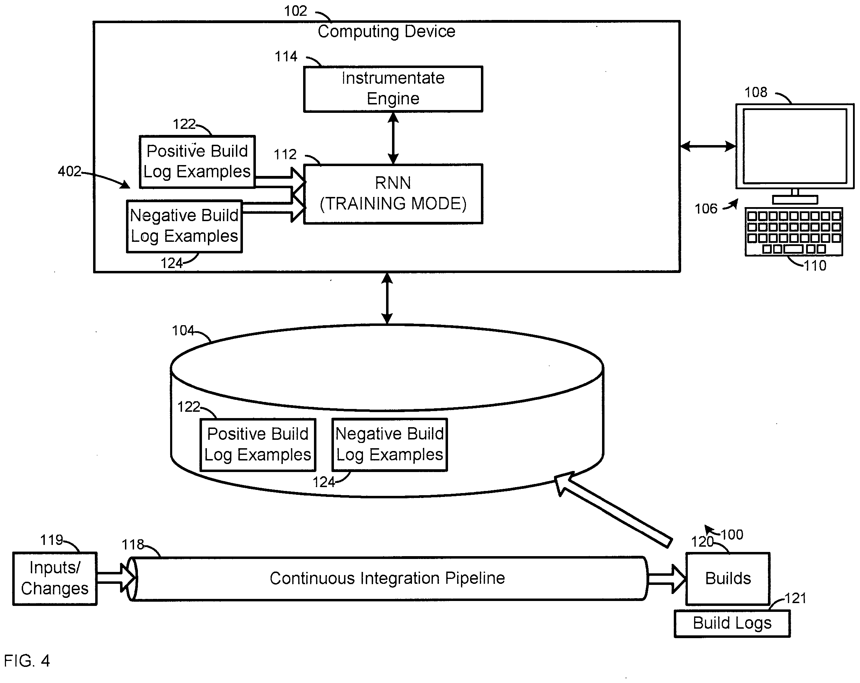

Attention is next directed to FIG. 4, FIG. 5, FIG. 6, FIG. 7, FIG. 9 and FIG. 9, which depict an example of the method 300. FIG. 4, FIG. 5 and FIG. 9 are substantially similar to FIG. 1, with like components having like numbers.

With reference to FIG. 4, training of the RNN 112 is depicted (e.g., at the block 302 of the method 300). In particular, the computing device 102 has collected a balanced dataset 402 from the database 104 comprising (e.g., an equal number of) positive build log examples 122 and negative build examples 124, and is inputting the positive build log examples 122 and negative build examples 124 into the RNN 112 while the RNN 112 is in a training mode.

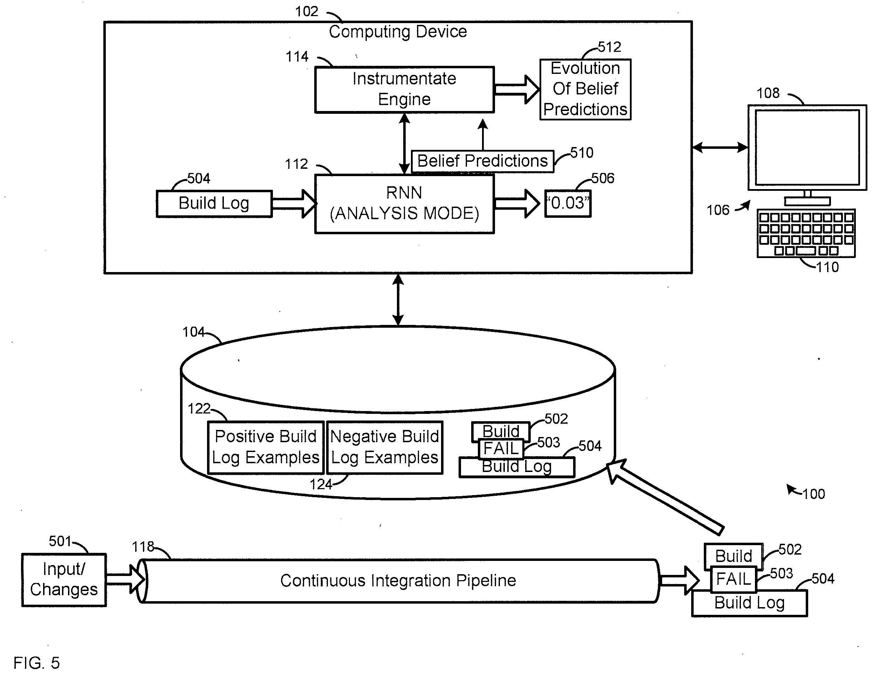

With attention next directed to FIG. 5, it is understood that the training of FIG. 4 has occurred and hence FIG. 5 follows, in time from FIG. 5. In FIG. 5, a particular input and/or particular programming code changes 501 are input to the CI pipeline 118 which outputs a corresponding build 502. It is further understood that the CI pipeline 118 determines that the build 502 fails, and hence the build 502 is labelled with a label 503 of "FAIL". The CI pipeline 118 furthermore outputs a corresponding build log 504 to the database 104 which, as depicted is also labelled with the label 503 of "FAIL". As depicted, the CI pipeline 118 further stores the labelled failed build 502 and the labelled build log 504, at the database 104. It is further understood that the label 503 may comprise a number of less than 0.5, and/or any other number indicating the build 502 has failed.

Alternatively, and/or in, the build log 504 may be stored with an indication, that the corresponding build 502 failed but without strictly being labelled with the label 503.

The computing device 102 may retrieve the build log 504 corresponding to the failed build 502 from the database 104, and input the build log 504 into the RNN 112 (e.g., at the block 304 of the method 300).

In some examples, the computing device 102 may retrieve build logs that correspond to failed builds periodically to perform the remainder of the method 300 that occurs after the training of the RNN 112, and/or the computing device 102 may retrieve build logs that correspond to failed builds as such build logs are populated at the database 104. In some examples, the CI pipeline 118 may store (e.g., at the database 104) build logs of any builds input to the CI pipeline 118, along with indications of whether corresponding builds failed or succeeded, and the computing device 102 may process only those build logs corresponding to failed builds; put another way, the computing device 102 may filter build logs corresponding to failed builds from build logs corresponding to successful builds.

As depicted, the RNN 112 analyzes the build log 504 and outputs a belief prediction 506 (e.g., a result) of "0.03" indicating that the build log 504 corresponds to a failed build 502 (e.g., the belief prediction 506 is less than a given threshold of, for example, 0.5). Such an output does not identify a region of the build log 504 that identifies where a root cause of the failure occurs in the build 502.

However, as depicted, while the RNN 112 analyzes the build log 504 according to a sequence of characters and/or words and/or lines and/or regions, in a sequence from beginning to end, the instrumentate engine 114 communicates with the RNN 112to determine internal states of the RNN 112, for example to monitor (e.g., at the block 306 of the method 300) evolution of belief predictions of the RNN 112, as the RNN 112 is analyzing the build log 504, according to successive regions of the build log 504.

In particular, the instrumentate engine 114 determines intermediate belief predictions 510 of the RNN 112, while the RNN 112 analyzes the build log 504 according to the sequence of lines of the build log 504. Put another way, the instrumentate engine 114 may receive and/or retrieve intermediate belief predictions 510 from the RNN 112, while the RNN 112 analyzes the build log 504 according to the sequence.

As depicted, the instrumentate engine 114 outputs data 512 indicating an evolution of the belief predictions 510 of the RNN 112.

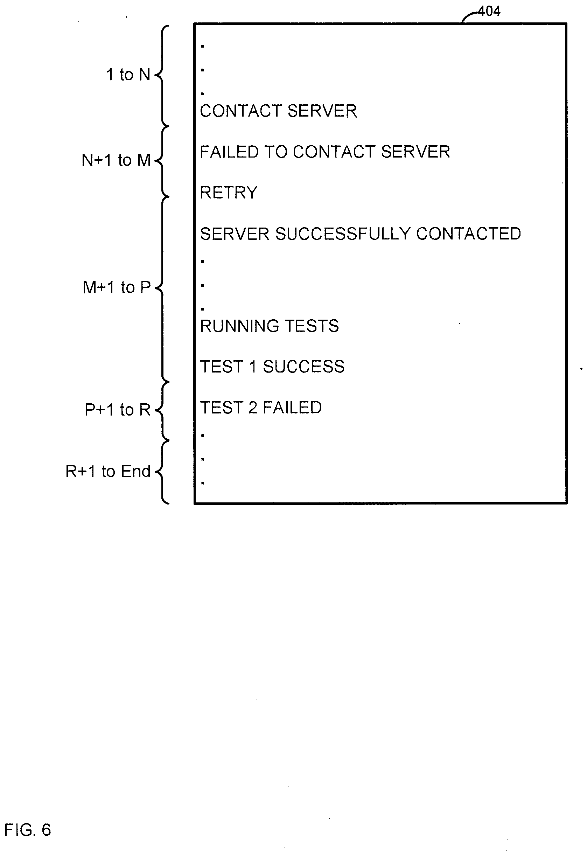

Attention is next directed to FIG. 6 which depicts an example of the build log 504. As depicted, the build log comprises regions of lines 1 to N, lines N+1 to M, lines M+1 to P, lines P+1 to R, and lines R+1 to END.

Lines 1 to N are generally represented by ellipses that are understood to indicate command outputs where it is understood no failure occurs, and includes a command output of "CONTACT SERVER". Hence, in a region of lines 1 to N no failure occurs in the corresponding build 502.

Lines N+1 to M include a command output of "FAILED TO CONNECT TO SERVER" (e.g., a failure occurs) and "RETRY". Hence, in a region of lines N+1 to M, a failure occurs in the corresponding build 502.

Lines M+1 to P include command outputs of "SERVER SUCCESSFULLY CONTACTED" and "RUNNING TESTS", with ellipses therebetween representing command outputs where no failure occurs, as well as a command output of "TEST 1 SUCCESS". Hence, in a region of lines M+1 to P, the failure indicated by lines N+1 to M is understood to be corrected at the build 502. Put another way, the failures indicated by lines N+1 to M were not fatal and/or not the root cause of a failure of the build 502.

Lines P+1 to R include a command output of "TEST 2 FAILED", as wells further lines represented by ellipses. Hence, in a region of lines P+1 to R a failure occurs in the corresponding build 502.

Lines R+1 to End include command outputs represented by ellipses, where it is understood that no specific failure may occur and/or failures due to the failure indicated by lines P+1 to R may occur. Hence, in a region of lines P+1 to R no failures occur and/or no failures corresponding to a root cause of the failure of the corresponding build 502 may occur.

Attention is next directed to FIG. 7, which depicts a graph 700 corresponding to the data 512 representing the evolution of the belief predictions of the RNN 112, as the RNN 112 is analyzing the sequence of the build log 504, for example on a line-by-line basis. As such, the graph 700 comprises a belief prediction of the RNN 112 as a function of line number of the build log 504. In particular, the regions of the lines of the build log 504 as depicted in FIG. 6 are indicated, and specifically lines 1 to N, lines N+1 to M, lines M+1 to P, lines P+1 to R, and lines R+1 to END. Dashed lines are used in FIG. 7 to better indicate such regions.

At line 1, the belief prediction is initially at 0.5 (e.g., due to the balanced data set having equal and/or about equal numbers of positive build log examples 122 and negative build log examples 124), and as no failures occur in the region of lines 1 to N, the belief prediction increases. It is further understood that the value of 0.5 represents the given threshold below which an output of the RNN 112 may represent a failure of the corresponding build 502, in particular when the output does not later increase above the given threshold and/or never crosses the given threshold.

However, as in the region of lines N+1 to M, a failure occurs, in the region of lines M to N+1 to M, the belief prediction decreases, and indeed drops below the given threshold of 0.5.

Conversely, as in the region of lines M+1 to P, the failure of the region of lines N+1 to M is corrected, in the region of lines M+1 to P, the belief prediction again increases to above the given threshold of 0.5.

However, as in the region of lines P+1 to R, another failure occurs, in the region of lines P+1 to R, the belief prediction decreases and drops below the given threshold of 0.5.

Finally, in the region of lines R+1 to End, the failure of the region of lines P+1 to R is not corrected, and in the region of lines R+1 to End, the belief prediction continues to decrease, for example to 0.03, the value of the final belief prediction 506 output by the RNN 112. Put another way, the belief prediction of the RNN 112 falls below the given threshold, and does not later increase above the given threshold and/or never again cross the given threshold and/or does not again cross the given threshold. However, the belief prediction of the RNN 112 falling below the given threshold, and not later increasing above the given threshold and/or never again crossing the given threshold and/or not again crossing the given threshold may be indicated by an output of the RNN being indicative that the build log is indicative of a failed build.

Comparing the graph 700 to a build log fatal error criterion condition 228 of the belief predictions falling below a given threshold and does not later increase above the given threshold and/or never crosses the given threshold, which in FIG. 7 is understood to be 0.5, it is understood that the given region determined at the block 308 of the method 300 may comprise the region of lines P+1 to R, and not the region of lines N+1 to M, as, while the belief prediction decreases in both regions, the belief predictions fall below the given threshold of 0.5 in the region in the region of lines M+1 to P, the belief prediction again crosses the given threshold to above the given threshold, while in the region of lines P+1 to R, the belief prediction does not again cross the given threshold and/or remains below the given threshold.

It is further understood that the graph 700 is indicative of an example how given regions of lines of the build log 504 may be selected for consideration of meeting, or not meeting, a build log fatal error criterion condition 228. For example, regions corresponding to groups of lines that are between changes in slope of the belief predictions of the RNN 112 may be selected, such as regions between peaks of the graph 700.

However, it is understood that the graph 700 is merely meant to illustrate certain features of an evolution of belief predictions of the RNN 112, and that the graph 700 may include more noise and/or more changes in slope than that depicted in FIG. 7. Hence, in some examples, regions corresponding to groups of lines that are between inversions of a slope of the belief predictions of the RNN 112 may be selected based on such inversions in slope meeting given criteria, such as the slope increasing or decreasing, on average for at least a given number of lines (e.g., such as at least 20 lines, at least 50 lines, at least 100 lines, amongst other possibilities) before inverting. In other examples, regions corresponding to groups of lines that are between inversions of a slope of the belief predictions of the RNN 112 may be selected based on a running average of the slope (e.g., of at least a given number of lines, such as at least 20 lines, at least 50 lines, at least 100 lines, amongst other possibilities) inverting, and the like. It is furthermore understood that the graph 700 may represent a moving average of belief predictions of the RNN 112, such that high frequency noise is filtered from the graph 700. Furthermore, any suitable technique may be used one or more of smooth an evolution of belief predictions of the RNN 112, filter noise, and/or high frequency noise, from an evolution of belief predictions of the RNN 112, and the like.

Attention is next directed to FIG. 8, which depicts another graph 800 corresponding the data 512 representing the evolution of the belief predictions of the RNN 112, as the RNN 112 is analyzing the sequence of the build log 504, for example on a line-by-line basis. As such, the graph 800 comprises a derivative of belief predictions of the RNN 112 as a function of line number of the build log 504. For example, the graph 800 may represent derivatives of the belief predictions of the graph 700. Hence, like the graph 700, at the graph 800 the regions of the lines of the build log 504 as depicted in FIG. 6 are indicated, and specifically lines 1 to N, lines N+1 to M, lines M+1 to P, lines P+1 to R, and lines R+1 to END. Dashed lines are used in FIG. 8 to better indicate such regions.

In particular, and with reference to both the graph 700 and graph 800, in the region of lines 1 to N, a slope of the graph 700 is constant and increasing, and hence the derivative of this region at the graph 800 is a constant value corresponding to the slope in this region. However, at the graph 700, in the region of lines N+1 to M, the slope inverts from increasing to decreasing, and hence a local minima 802 occurs in the derivative in the region of lines N+1 to M, as seen in the graph 800.

Conversely, at the graph 700, in the region of lines M+1 to P, the slope again inverts, but from decreasing to increasing, and hence a local maxima 804 occurs in the derivative, as seen in the graph 800.

Again with reference to the graph 700, in the region of lines P+1 to R, the slope again inverts from increasing to decreasing, however in a manner faster than in the region of the lines N+1 to M, hence another local minima 806 occurs in the derivative, as seen in the graph 800, that is less than the local minima 802.

Finally, and again with reference to the graph 700, in the region of lines R+1 to End, the slope changes again but indicates a slower decrease in the belief predictions than in the region of lines P+1 to R, hence another local maxima 808 occurs in the derivative, as seen in the graph 800.

Comparing the graph 800 to a build log fatal error criterion condition 228 of derivatives of the belief predictions being at a minima, it is understood that the given region determined at the block 308 of the method 300 may comprise the region of lines P+1 to R, and not the region of lines N+1 to M, as the local minima 806 of the derivative of the region of lines P+1 to R is smaller than the local minima 802 of the derivative of the region of lines N+1 to M.

However, the graph 800 alone may not be enough to determine the given region of the block 308. Hence, when there are two or more local minima as in the graph 800, data corresponding to the graph 700 may also be processed to determine in which of the regions of the two or more local minima the belief prediction also fell below a given threshold such as 0.5, with the region where the belief prediction also fell below the given threshold selected as the given region of the block 308.

Alternatively, and/or in addition, probabilities of a region corresponding a root cause of a failure of the corresponding build 502 may be assigned, on the basis of which of the local minima 802, 806 is smaller, and/or on the basis of in which of the regions the belief prediction falls below the given threshold. For example, with reference to the graphs 700, 800, the region of lines P+1 to R may be assigned a probability of 95%, and the region of lines N+1 to M may be assigned a probability of 5%. Hence, the region of lines P+1 to R may be selected as the given region of the block 308.

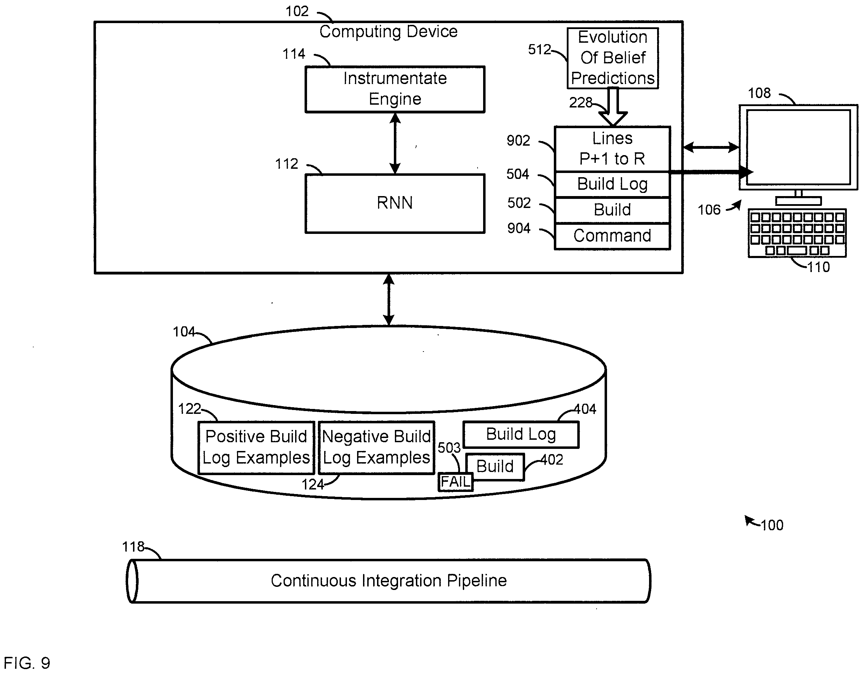

Attention is next directed to FIG. 9 which depicts the computing device 102 determining (e.g., at the block 308 of the method 300), from the data 512 representing the evolution of the belief predictions, that a given region of the build log 504 meets a build log fatal error criterion condition 228 comprises the lines P+1 to R, as described with respect to FIG. 7 and FIG. 8. As depicted an arrow labelled "228" indicates that a given region of the build log 503 meets a build log fatal error criterion 228.

FIG. 9 further depicts the computing device 102 outputting (e.g., at the block 310 of the method 300) an indication 902 of the given region (e.g., comprising text "Lines P+1 to R") to the computing device and/or terminal 106, along with the build log 504, the build 502 and a command 904 for initiating a process for repairing the build 502, as previously described.

It is understood that once the build 502 is repaired, for example by correcting the portion of the build 502 that caused "TEST 2" to fail, as indicated by the Lines P+1 to R of the build log 504, the build 502 may be again input to the CI pipeline 118.

It is further understood that the build log 404 may be stored at the database 104 as a negative build log example 124 and used for later training of the RNN 112. Indeed, as examples of positive and negative build logs continue to increase at the database 104, the RNN 112 may undergo periodic retraining using such examples.

Indeed, the identification of regions of build logs, using the method 300, that correspond to root cause failures of corresponding builds may also be used by components of the system 100 to generally improve and/or repair other builds 120, for example before being input to the CI pipeline 118. For example, the identification of regions of build logs, and repairs thereof, may be used to train one or more machine learning algorithms of an automated code repair computing device, and builds 120 may be input to such an automated code repair computing device prior to being input to the CI pipeline 118. In this manner, code corresponding to failures for which the automated code repair computing device is trained to repair, may be repaired prior to being input to the CI pipeline 118.

Furthermore, training of the RNN 112 may occur periodically, for example using a last given number of examples of positive and negative build logs, (e.g., a last 1000 examples of positive and negative build logs, a last 10,000 examples of positive and negative build logs, amongst other possibilities), while older examples of positive and negative build logs may be discarded and/or deleted from the database 104, for example to save memory of the database 104.

Hence, provided herein is a device, system and method for implementing a recurrent neural network to determine a given region of a build log that meets a fatal error criterion condition model. It is understood that the device, system and method provided herein may have an advantage of using a training data set (e.g., a balanced data set), for an RNN, of positive and negative build log examples, that excludes identification of regions of failure in the negative build log examples. Put another way, the training data set excludes identification of specific regions of failures in build logs and/or excludes examples of failure lines and/or failure regions, and the like, of a build log. Rather, the RNN is trained using training data set of full positive and negative build log examples such that the RNN may specifically identify a region of failure in a new build log based on a believe prediction evolution of the RNN.

It is further understood that the device, system and method provided herein may lead to significant reduction of processing resource usage, for example at least at the computer device and/or terminal 106, and the like. In particular, if a build log alone were used to repair a corresponding failed build via the computer device and/or terminal 106, significant processing resources may be expended via the computer device and/or terminal 106 in identifying a region of a root cause of a failure of the build so that the root cause can be repaired, as compared to when the device, system and method provided herein is used to identify a region of a root cause of a failure of the build. Similarly, significant time would be wasted via the computer device and/or terminal 106 in identifying a region of a root cause of a failure of the build so that the root cause can be repaired, as compared to when the device, system and method provided herein is used to identify a region of a root cause of a failure of the build. As a real world example, in a large organization, on the order of 1 to 2 million failed builds may occur per year; identifying a root cause of a failed build may take about 10 minutes. Using an example, of 2 million failed builds, identifying the root causes may take a total of more than 33,000 hours in the year, with corresponding processing resources utilized, and which may be obviated using the device, system and method provided herein.

It further understood that while present examples are directed to build logs of a CI pipeline, the device, system and method provided herein may be adapted for other types of logs that include success/failure labels and/or positive and negative log examples including, but not limited to CI logs, test logs, production logs, transaction logs, etc. For example, the method 300 may be adapted to: training, via the computing device 102, a recurrent neural network (RNN), using a balanced dataset, to predict whether logs input to the RNN are indicative of respective successful computer code or respective failed computer code, the balanced dataset comprising positive log examples and negative log examples of corresponding computer code, the positive log examples labelled as being indicative of successful computer code, and the negative log examples labelled as being indicative of failed computer code; inputting, via the computing device, a log to the RNN; monitoring, via the computing device, evolution of belief predictions of the RNN, as the RNN is analyzing the log, according to successive regions of the log; determining, via the computing device, based on the evolution of the belief predictions, that a given region of the log meets a log fatal error criterion condition; and outputting, via the computing device, an indication of the given region. A log fatal error criterion condition may be similar to a build log fatal error criterion condition 228, but applied to logs other than build logs.

As should by now be apparent, the operations and functions of the devices described herein are sufficiently complex as to require their implementation on a computer system, and cannot be performed, as a practical matter, in the human mind. In particular, computing devices, and the like, such as set forth herein are understood as requiring and providing speed and accuracy and complexity management that are not obtainable by human mental steps, in addition to the inherently digital nature of such operations (e.g., a human mind cannot interface directly with a recurrent neural network, amongst other features and functions set forth herein).

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XY, YZ, XZ, and the like). Similar logic can be applied for two or more items in any occurrence of "at least one..." and "one or more..." language.

Unless the context of usage unambiguously indicates otherwise, articles "a," "an," and "the" should not be interpreted as meaning "one" or "only one." Rather such articles should be interpreted as meaning "at least one" or "one or more." Similarly, when the terms "the" or "said" are used to refer to a noun previously introduced by the indefinite article "a" or "an," "the" and "said" mean "at least one" or "one or more" unless the usage unambiguously indicates otherwise.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", in yet further examples "within 0.5%", and in yet further examples "within 0. 1%".

Persons skilled in the art will appreciate that in some examples, the functionality of devices and/or methods and/or processes described herein can be implemented using preprogrammed hardware or firmware elements (e.g., application specific integrated circuits (ASICs), electrically erasable programmable read-only memories (EEPROMs), etc.), or other related components. In other examples, the functionality of the devices and/or methods and/or processes described herein can be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A method comprising:
training, via a computing device (102), a recurrent neural network (RNN), using a balanced dataset (122, 124), to predict whether logs input to the RNN (112) are indicative of respective successful computer code or respective failed computer code, the balanced dataset (122, 124) comprising positive log examples (122) and negative log examples (124) for corresponding computer code, the positive log examples (122) labelled as being indicative of successful computer code, and the negative log examples (124) labelled as being indicative of failed computer code;
inputting, via the computing device (102), a log to the RNN (112);
monitoring, via the computing device (102), evolution of belief predictions (512) of the RNN (112), as the RNN (112) is analyzing the log, according to successive regions of the log;
determining, via the computing device (102), based on the evolution of the belief predictions (512), that a given region of the log meets a log fatal error criterion condition; and
outputting, via the computing device (102), an indication of the given region.

2. The method of claim 1, wherein the balanced dataset (122, 124) comprises an equal number of the positive log examples (122) and the negative log examples (124).

3. The method of claim 1 or 2, wherein the log is labelled as being indicative of corresponding failed computer code.

4. The method of one of the claims 1 to 3, wherein monitoring evolution of the belief predictions (512) of the RNN (112) according to the successive regions of the log comprises monitoring a prediction of the RNN (112) that the log is indicative of successful computer code or failed computer code on a character-by- character, word-by-word basis or a line-by-line basis or a region-by-region basis.

5. The method of one of the claims 1 to 4, wherein a region, of the successive regions of the log, comprises one or more of: at least one character of the log; at least one word of the log; and at least one line of the log.

6. The method of one of the claims 1 to 5, wherein the log fatal error criterion condition comprises: the belief predictions falling below a given threshold at the given region, and an output of the RNN (112) being indicative that the log is indicative of corresponding failed computer code.

7. The method of one of the claims 1 to 6, wherein the balanced dataset (122, 124) comprises an about equal number of the positive log examples (122) and the negative log examples (124), and the log fatal error criterion condition comprises: the belief predictions falling below 0.5 at the given region, and an output of the RNN (112) being indicative that the log is indicative of corresponding failed computer code.

8. The method of one of the claims 1 to 7, wherein the log fatal error criterion condition comprises: a derivative of the belief predictions being at a minimum at the given region, and an output of the RNN (112) being indicative that the log is indicative of a corresponding failed computer code.

9. The method of one of the claims 1 to 8, wherein the given region comprises a plurality of lines of the log.

10. The method of claim 9, wherein the indication of the given region identifies the plurality of lines.

11. The method of one of the claims 1 to 10, further comprising initiating a process for repairing corresponding failed computer code of the log, in a region of the corresponding failed computer code indicated by the given region.

12. A computing device (102) comprising:
a controller (202); and
a computer-readable storage medium (204) having stored thereon program instructions (206) that, when executed by the controller (202), cause the computing device (102) to perform a set of operations comprising the method of any one of claims 1 to 11.

13. A non-transitory computer-readable storage medium (204) having stored thereon program instructions (206) that, when executed by at least one computing device (102), causes the at least one computing device (102) to perform the method (300) of any one of claims 1 to 10.
